# EUROPEAN PATENT APPLICATION

(11) **EP 4 517 897 A1**
(43) Date of publication of application: **05.03.2025**
(21) Application number: 24187586.3
(22) Date of filing: 10.07.2024
(51) Int. Cl.: H01M 10/0525, H01M 10/54, H01M 10/058, H01M 10/44

(54) **MANUFACTURING METHOD FOR BATTERY MATERIAL**

(30) Priority: 24.07.2023 JP 2023119554
(71) Applicant: Prime Planet Energy & Solutions, Inc., Chuo-ku Tokyo 103-0022 (JP)
(72) Inventor: OKUDA, Koji, Tokyo, 103-0022 (JP)
(74) Representative: Kuhnen & Wacker Patent- und Rechtsanwaltsbüro PartG mbB

(57) **Abstract**

A manufacturing method disclosed herein includes a preparing step at which a lithium ion secondary battery having been electrically charged to be equal to or more than a predetermined reference SOC is prepared, a filling step at which an inside of the lithium ion secondary battery is filled with an aqueous medium, and a collecting step at which the aqueous medium is collected from the inside of the lithium ion secondary battery. By doing this, it is possible to prepare a Li solution in which Li of a negative electrode active material is eluted into the aqueous medium. Then, by collecting this Li solution, it is possible to easily perform collection of a large amount of Li.

## Description

### BACKGROUND

### 1. Technical Field

A herein disclosed technique relates to a manufacturing method for a battery material.

### 2. Description of the Related Art

A lithium ion secondary battery is used widely in various fields. This lithium ion secondary battery (below, simply referred to as "battery", too) contains various metal materials (Li, Ni, Co, Mn, Al, Cu, and the like). For example, as a positive electrode active material, it is possible to use a lithium-transition metal complex oxide, such as lithium nickel cobalt manganese composite oxide. As a positive electrode substrate, it is possible to use aluminum, or the like. On the other hand, as a negative electrode active material, it is possible to use a carbon material, or the like. As a negative electrode substrate, it is possible to use copper, or the like. In addition, as a battery case, it is also possible to use aluminum, or the like.

Recently, a develop of a collection technique (a manufacturing method for a battery material) is progressed in which collection of a valuable metal (the Li, the Ni, the Co, the Mn, or the like) from a used battery is performed to reproduce it as the battery material. For example, in this kind of collection technique, at first, the used battery is roasted. Next, an electrode body after the roast (a black mass) is taken out from the inside of the battery. Then, to make the black mass be immersed in an acid liquid, an acid exudation processing is performed. By doing this, it is possible to prepare an acid exudation liquid in which the metal component (the Li, the Ni, the Co, the Mn, Al, Cu, or the like) has been dissolved into the acid liquid. Then, on this acid exudation liquid, various separation processings (neutralization precipitation, solvent extraction, or the like) are performed. By doing this, it is possible to implement collection of the desired valuable metal, so as to reproduce it as the battery material.

An example of this kind of collection technique is disclosed in JP2022-49831 and JP2021-72157. As described in these cited documents, regarding a conventional technique, it was recommended to perform electric discharge on the battery before the collection processing of the valuable metal was performed. For example, Patent Document 1 shows a knowledge that performing the electric discharge on the lithium ion secondary battery induces making the Li be stored on the positive electrode active material so as to enhance a collection rate of the Li.

### SUMMARY

Anyway, according to recent growing awareness for an environment problem, it is required to further enhance the Li collection rate from the used lithium ion secondary battery. As a result of the present inventor having further discussed in order to respond to a request described above, a surprising knowledge was obtained that the electric discharge processing recommended in the conventional technique became a cause of reducing the Li collection rate. In particular, as described in JP2022-49831, or the like, when the electric discharge is performed on the lithium ion secondary battery, the Li is stored in the positive electrode active material. However, in a general lithium ion secondary battery, Al is used on a positive electrode substrate being a member disposed adjacent to the positive electrode active material. In other words, at a positive electrode side of the battery after the electric discharge, a large amount of Li and a large amount of Al are present. If the roast is performed in this state, an alloy of the Li and the Al (a Li-Al alloy) is generated. This Li-Al alloy is hardly dissolved in an acid liquid, and thus the collection by the acid exudation processing is hard. At that time, the Li is remained at a solid content (a residue) side, which causes reducing the Li collection rate.

A technique disclosed herein has been made in view of the problems described above, and has an object to enhance the Li collection rate at the time of reproducing the battery material from the lithium ion secondary battery.

For the problems described above, a manufacturing method for a battery material having a configuration described below (below, simply referred to as "manufacturing method", too) is provided.

A herein disclosed manufacturing method for a battery material includes a preparing step at which a lithium ion secondary battery having been electrically charged to be equal to or more than a predetermined reference SOC is prepared, a filling step at which an inside of the lithium ion secondary battery is filled with an aqueous medium, and a collecting step at which the aqueous medium is collected from the inside of the lithium ion secondary battery.

In the manufacturing method having the above described configuration, a battery having been electrically charged to be equal to or more than a constant level is treated as a collection object. In contrast to the electrically discharged battery described above, on the electrically charged battery, the Li is stored in the negative electrode active material. Then, in the herein disclosed manufacturing method, the inside of the battery having been electrically charged is filled with the aqueous medium. By doing this, the Li in the negative electrode active material is eluted into the aqueous medium. Then, by collecting this aqueous medium into which the Li is eluted, collection of a large amount of Li can be easily performed. Additionally, in the herein disclosed manufacturing method, the collection of the Li can be performed before the roast processing is performed, and thus it is also possible to suppress the reduction in the Li collection rate due to alloying. As described above, according to the herein disclosed manufacturing method, it is possible to implement the high Li collection rate.

### BRIEF DESCRIPTIONOF THE DRAWINGS

FIG. 1 is a longitudinal cross section view that schematically shows an inside structure of a lithium ion secondary battery.
FIG. 2 is a perspective view that schematically shows an electrode body of the lithium ion secondary battery shown in FIG. 1.
FIG. 3 is a flowchart that is to explain a manufacturing method for a battery material in accordance with one embodiment.
FIG. 4 is a flowchart that is to explain a preparing step of the manufacturing method according to one embodiment in detail.
FIG. 5 is a flowchart that is to explain a separating step of the manufacturing method according to one embodiment in detail.

### DETAILED DESCRIPTION

Below, an embodiment of the herein disclosed technique will be described. Incidentally, the matters other than matters particularly mentioned in this specification and required for practicing the present disclosure can be grasped as design matters of those skilled in the art based on the related art in the present field. The herein disclosed technique can be performed on the basis of a content disclosed in the present specification and of a common general technical knowledge in this field.

### 1. Lithium ion secondary battery

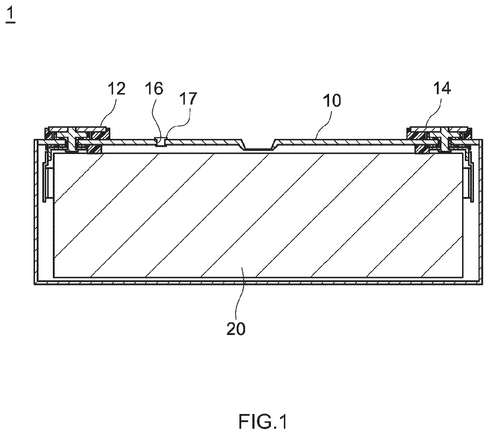

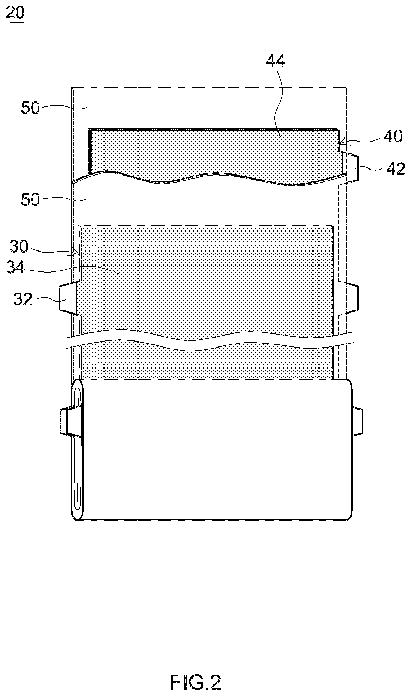

A manufacturing method in accordance with the present embodiment is, by performing collection of a valuable metal, such as lithium (Li), from a lithium ion secondary battery, so as to reproduce the battery material (typically, a material of a positive electrode active material of the lithium ion secondary battery). Below, an example of the battery being a collection object will be explained. FIG. 1 is a longitudinal cross section view that schematically shows an inside structure of the lithium ion secondary battery. FIG. 2 is a perspective view that schematically shows an electrode body of the lithium ion secondary battery shown in FIG. 1. As shown in FIG. 1, the lithium ion secondary battery 1 includes an outer case 10, an electrode body 20, and an electrolyte (omitted in figures).

### (1) Outer case

The outer case is not particularly restricted, if it is a container accommodating the electrode body and the electrolyte. For example, the outer case 10 shown in FIG. 1 is a case formed in a box shape. On this outer case 10 formed in the box shape, for example, a metal material (aluminum (Al), or the like) having a constant strength is used. As shown in FIG. 1, onto the outer case 10, a positive electrode terminal 12 and a negative electrode terminal 14 are attached. This positive electrode terminal 12 and this negative electrode terminal 14 are connected to the electrode body 20 inside the outer case 10. In particular, the positive electrode terminal 12 is connected to a positive electrode plate 30 (see FIG. 2) of the electrode body 20. On this positive electrode terminal 12, the aluminum (Al), or the like, is used. On the other hand, the negative electrode terminal 14 is connected to a negative electrode plate 40 of the electrode body 20. On this negative electrode terminal 14, copper (Cu), or the like, is used.

Furthermore, on the outer case 10 shown in FIG. 1, a liquid injection hole 16 is formed. This liquid injection hole 16 is an opening part that communicates with an inside and an outside of the outer case 10. In the manufacture of the lithium ion secondary battery 1, an electrolytic solution is filled through this liquid injection hole 16 into the inside of the outer case 10. Then, the liquid injection hole 16 is sealed with a sealing plug 17 after filling with the electrolytic solution is performed.

### (2) Electrode body

The electrode body 20 is a power generating element of the lithium ion secondary battery 1. As shown in FIG. 2, the electrode body 20 includes the positive electrode plate 30, the negative electrode plate 40, and a separator 50. Incidentally, the electrode body 20 shown in FIG. 2 is a wound electrode body. This wound electrode body is a part in which a long laminate body, formed in a strip-like shape and configured by laminating the positive electrode plate 30, the negative electrode plate 40, and the separator 50, is wound. Incidentally, a structure of the electrode body 20 is not restricted to the wound electrode body, and might be another conventionally known structure (a laminate type electrode body, or the like).

The positive electrode plate 30 includes a positive electrode substrate 32 formed in a foil shape, and a positive electrode active material layer 34 imparted on a surface of this positive electrode substrate 32. On the positive electrode substrate 32, the aluminum (Al), or the like, is used. In addition, the positive electrode active material layer 34 is a composite material layer that contains a positive electrode active material, an electrically conducting material, a binder, or the like. The positive electrode active material is a metal material that contains at least lithium (Li). As an example of the positive electrode active material, it is possible to use a lithium-transition metal complex oxide, such as lithium nickel composite oxide, lithium cobalt composite oxide, lithium manganese composite oxide, lithium nickel manganese composite oxide, lithium manganese cobalt composite oxide, lithium nickel cobalt composite oxide, and lithium nickel cobalt manganese composite oxide. In addition, as another example of the positive electrode active material, it is possible to use a lithium transition metal phosphate compound, such as lithium iron phosphate, lithium manganese phosphate, and lithium manganese iron phosphate. Incidentally, although more details are described later, the herein disclosed manufacturing method can be contributed in enhancing collection rates of valuable metals other than the Li (the Ni, the Co, the Mn, and the like). Thus, it is preferable that the collection object (the battery) contains the lithium-transition metal complex oxide containing the Ni, the Co, the Mn, or the like. In addition, as the electrically conducting material, it is possible to use a carbon material, such as acetylene black and graphite. As the binder, it is possible to use a resin material, such as polyvinylidene fluoride (PVdF).

On the other hand, the negative electrode plate 40 includes a negative electrode substrate 42 formed in a foil shape, and a negative electrode active material layer 44 imparted on a surface of this negative electrode substrate 42. On the negative electrode substrate 42, copper (Cu), or the like, is used. In addition, the negative electrode active material layer 44 is a composite material layer that contains a negative electrode active material, a binder, a thickening agent, or the like. As an example of the negative electrode active material, it is possible to use a carbon material, such as graphite, hard carbon, and soft carbon. In addition, as another example of the negative electrode active material, it is possible to use lithium titanium oxide (LTO), silicon carbide (SiC), a composite body containing carbon and silicon, silicon oxide (SiOx), or the like. In addition, as the binder, it is possible to use styrene butadiene rubber (SBR), or the like. As the thickening agent, it is possible to use carboxymethyl cellulose (CMC), or the like.

The separator 50 is an insulation sheet disposed between the positive electrode plate 30 and the negative electrode plate 40. On this separator 50, for example, a resin material is used, such as polyethylene (PE), polypropylene (PP), polyester, cellulose, and polyamide. In addition, on a surface of the separator 50, a heat resistance layer containing an inorganic filler might be formed. As the inorganic filler described above, it is possible to use an inorganic oxide, such as aluminum oxide, magnesium oxide, silicon oxide, and titanium oxide, a nitride, such as aluminum nitride and silicon nitride, a metal hydroxide, such as calcium hydroxide, magnesium hydroxide, and aluminum hydroxide, a clay mineral, such as mica, talc, boehmite, zeolite, apatite, and kaolin, or the like.

### (3) Electrolyte

In this lithium ion secondary battery 1, the electrolyte is present between the positive electrode plate 30 and the negative electrode plate 40. By doing this, it is possible to move a charge carrier (a Li ion) between the positive electrode plate 30 and the negative electrode plate 40. Incidentally, a form of the electrolyte does not restrict the herein disclosed technique, and a conventionally known form can be applied without particular restriction. As an example of the form of the electrolyte, it is possible to use a nonaqueous electrolytic solution, a gel-form electrolyte, a solid electrolyte, or the like.

### 2. Manufacturing method for a battery material

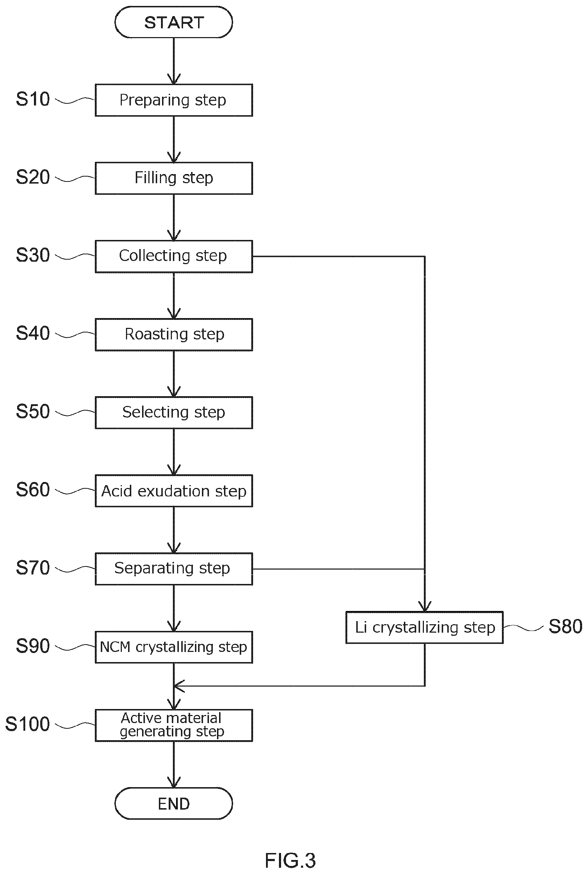

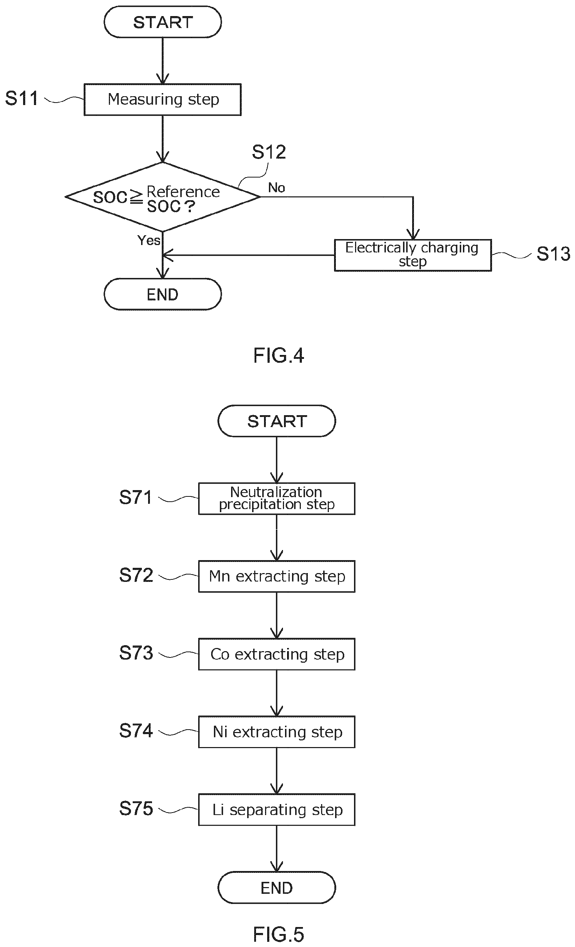

Below, the manufacturing method in accordance with the present embodiment will be described. FIG. 3 is a flowchart that is to explain a manufacturing method in accordance with the present embodiment. FIG. 4 is a flowchart that is to explain a preparing step in detail. In addition, FIG. 5 is a flowchart that is to explain a separating step in detail.

As shown in FIG. 3, the manufacturing method in accordance with the present embodiment includes a preparing step S10, a filling step S20, a collecting step S30, a roasting step S40, a selecting step S50, an acid exudation step S60, a separating step S70, a Li crystallizing step S80, a NCM crystallizing step S90, and an active material generating step S100. Below, each step will be described.

### (1) Preparing step S10

At the preparing step S10, the lithium ion secondary battery 1 is prepared that has been electrically charged to a level equal to or more than a predetermined reference SOC. At the present step, it is enough to prepare the battery having been electrically charged to the level equal to or more than the reference SOC, and a particular procedure is not particularly restricted. In addition, it is preferable that the collection object for the herein disclosed manufacturing method is a used battery. By doing this, it is possible to manufacture the battery material (typically, the Li) while reducing the load for the environment. However, the collection object of the herein disclosed manufacturing method is not restricted to the used battery. For example, it is possible to make the collection object be a unused battery that has been recognized as a defective product during manufacture and has not been shipped.

Here, the preparing step S10 in the present embodiment includes a measuring step S11, a deciding step S12, and an electrically charging step S13 (see FIG. 4). By doing this, it is possible to surely prepare the battery being equal to or more than the reference SOC. Below, it will be particularly explained.

### (a) Measuring step S11

At the measuring step S11, the SOC of the lithium ion secondary battery 1 is measured. The term "SOC" in the present specification means a depth of charge (State of Charge). Particularly, in the present specification, an electrical charge state being an upper limit of an operating voltage (in other words, a state where the voltage is not increased even if electrical charging is continued) is treated as SOC = 100%. On the other hand, an electrical charge state being a lower limit of the operating voltage (in other words, a state where the voltage is not decreased even if electrical discharging is continued) is treated as SOC = 0%. Then, the battery having the high SOC (the electrically charged battery) has the Li stored in the negative electrode active material. On the other hand, the battery having the low SOC (the electrically discharged battery) has the Li stored in the positive electrode active material. Incidentally, as a particular means for the SOC measurement, a conventionally known measuring means can be used without particular restriction, and a detailed explanation of it is omitted because it is not to restrict the herein disclosed technique.

### (b) Deciding step S12

Next, at the deciding step S12, it is decided whether the measured SOC is equal to or more than the reference SOC. Here, the term "reference SOC" is a threshold for representing an electrical charge state where the sufficient Li has been stored in the negative electrode active material. It is preferable that this reference SOC is set according to a standard (a material, a size, or the like) of the collection object (the battery), a degradation state, or the like. Incidentally, if the reference SOC is set to be higher, the Li storage amount in the negative electrode active material is increased and thus the Li collection rate at the collecting step S30 tends to be enhanced. For example, it is preferable that the reference SOC is set to be equal to or more than 30% (further suitably equal to or more than 35%, or in particular suitably equal to or more than 40%). On the other hand, the upper limit value of the reference SOC is not particularly restricted, and might be 100%. However, if the reference SOC is set to be too high, the electrical charge has to be unnecessarily performed and thus an energy or time required for the Li collection tends to be increased. From a perspective described above, it is preferable that the upper limit value of the reference SOC is set to be equal to or less than 75% (further suitably equal to or less than 70%, furthermore suitably equal to or less than 65%, or in particular suitably equal to or less than 60%). Then, when it was decided at the deciding step S12 that the electrical charge state was equal to or more than the reference SOC (YES in S12), the preparing step S10 is ended (END in FIG. 4). In this case, the filling step S20 shown in FIG. 3 is started. On the other hand, when the electrical charge state was less than the reference SOC (NO in S12), the electrically charging step S13 is performed.

### (c) Electrically charging step S13

At the electrically charging step S13, the lithium ion secondary battery 1 decided to be less than the reference SOC is electrically charged until the lithium ion secondary battery becomes equal to or more than the reference SOC. Then, in the manufacturing method in accordance with the present embodiment, after the electrically charging step S13 is performed, the preparing step S10 is ended (END in FIG. 4). As described above, the preparing step S10 in the present embodiment includes the measuring step S11, the deciding step S12, and the electrically charging step S13. By doing this, it is possible to surely supply the battery, having been charged to be equal to or more than the reference SOC, to the filling step S20.

### (2) Filling step S20

At the present step, the inside of the lithium ion secondary battery 1 after the preparing step S10 is filled with an aqueous medium. At this liquid injection step S20, firstly, the sealing plug 17 is removed from the outer case 10 of the lithium ion secondary battery 1 (see FIG. 1). By doing this, the inside and the outside of the outer case 10 are communicated via the liquid injection hole 16. Then, a liquid injection nozzle is inserted into the liquid injection hole 16, and the aqueous medium is injected into the inside of the outer case 10. By doing this, it is possible to fill the inside of the battery with the aqueous medium. Here, the battery supplied at the filling step S20 has been electrically charged to be equal to or more than the reference SOC, and thus it stores a large amount of Li in the negative electrode active material. If this negative electrode active material is immersed into the aqueous medium, the Li is eluted from the negative electrode active material into the aqueous medium. As this result, the aqueous medium in which the large amount of Li is dissolved (below, referred to as "Li solution", too) is prepared.

The term "aqueous medium" in the present specification means a liquid medium in which water is a main component. As an example of the aqueous medium described above, it is possible to use water, such as distilled water, ion exchange water, pure water, and ultrapure water. Incidentally, the aqueous medium might contain a component other than the water, if the effect of the herein disclosed technique (the Li elution from the negative electrode active material) is not significantly inhibited. For example, the aqueous medium might be an aqueous solution with a predetermined metal salt (sodium chloride, calcium chloride, lithium chloride, nitrate, organic acid, or the like). However, these metal salts contain a metal element, and thus it could cause increasing an impurity at the separating step S70 described later. Additionally, in a case where the aqueous solution with the metal salt is used, a dissolution amount of the Li tends to be reduced. From these perspectives, it is preferable that the aqueous medium substantially contains no metal salt. In particular, a content amount of the metal salt with respect to a total weight of the aqueous medium (100 wt%) is preferably equal to or less than 0.1 wt%, further preferably equal to or less than 0.05 wt%, furthermore preferably equal to or less than 0.01 wt%, or in particular preferably equal to or less than 0.005 wt%.

In addition, the aqueous medium might contain a liquid medium other than the water. For example, as the aqueous medium, it is possible to use a mix liquid with the water and an organic solvent soluble in this water (for example, alcohol, such as ethanol). Incidentally, in consideration of an elution amount of the Li, it is preferable that the content amount of the organic solvent in the aqueous medium is smaller. For example, a content amount of the organic solvent with respect to the total weight of the aqueous medium (100 wt%) is preferably equal to or less than 50 wt%, further preferably equal to or less than 10 wt%, furthermore preferably equal to or less than 1 wt%, or in particular preferably equal to or less than 0.1 wt%.

Incidentally, the term "fill" in the present specification represents a state where the aqueous medium is present only at the inside of the battery (the outer case). On the other hand, the wording "submerged in water" in the present specification represents a state where the aqueous medium is continuously present at the inside and the outside of the battery via the opening part (the liquid injection hole 16, or the like) of the outer case. Although more details are described later, it has been confirmed by an experiment that, even if the electrically charged battery is submerged in water of the aqueous medium, the elution of the Li into the aqueous medium is hardly induced. This is supposed that, when the electrically charged battery is submerged in water, the voltage is drastically reduced by an outside short circuit and then the elution of the Li from the negative electrode active material is inhibited. In contrast, at the filling step of the herein disclosed manufacturing method, in order to prevent the outside short circuit via the aqueous medium, the aqueous medium is injected into only the inside of the battery. By doing this, it is possible to properly elute the Li of the negative electrode active material into the water type solvent.

Incidentally, the Li in the negative electrode active material is almost eluted, 1 day after filling with the water type solvent. However, from a perspective of further surely eluting the Li, at the present step, it is preferable to leave the battery filled with the water type solvent for 1 day or more (further suitably for 2 days or more, or in particular suitably for 3 days or more). On the other hand, in consideration of the manufacture efficiency, an upper limit of the leaving time is preferably equal to or less than 14 days, further preferably equal to or less than 7 days, furthermore preferably equal to or less than 5 days, or in particular preferably equal to or less than 4 days. By doing this, it is possible to inhibit the filling step S20 from being unnecessarily lengthened. In addition, it is preferable that a temperature of the aqueous medium at the present step is suitably set within a range of 10°C to 40°C. By doing this, it is possible to enhance an elution efficiency of the Li.

### (3) Collecting step S30

At the present step, from the inside of the lithium ion secondary battery, the aqueous medium is collected. As described above, the aqueous medium (a Li solution) after the filling step S20 contains a large amount of Li. By collecting this Li solution, it is possible from the inside of the battery to perform collection of a large amount of Li. As described above, the herein disclosed technique can perform the preparing step S10, the filling step S20, and the collecting step S30, so as to implement the high Li collection rate when the battery material (Li) is reproduced from the battery.

Incidentally, in the inside of the battery after the collecting step S30, a part of the Li and the metal element other than the Li (the Ni, the Co, the Mn, the Al, the Cu, or the like) might be remained. Thus, the herein disclosed manufacturing method might contain a step for performing collection of the valuable metal (the Li, the Ni, the Co, the Mn, or the like) from the battery after the collecting step S30. Below, an example of the step after the collecting step S30 will be described.

### (4) Roasting step S40

The manufacturing method in accordance with the present embodiment performs the roasting step S40 at which the battery, after the aqueous medium (the Li solution) is collected, is heated. Here, the manufacturing method in accordance with the present embodiment can implement collection of a large amount of Li before the roasting step S40 is performed. Additionally, in the present embodiment, as the collection object, the battery having been electrically charged to be equal to or more than the reference SOC (the Li has been stored at the negative electrode active material side) is prepared. Thus, based on the manufacturing method in accordance with the present embodiment, it is possible at the roasting step S40 to inhibit a situation where the large amount of Li and Al are present at the positive electrode side. As this result, it is possible at the roasting step S40 to inhibit generation of an alloy with the Li and the Al (a Li-Al alloy). By doing this, it is possible to further suitably inhibit the reduction in the Li collection rate.

Incidentally, a heating temperature at the present step is preferably equal to or more than 400°C, further preferably equal to or more than 500°C, furthermore preferably equal to or more than 600°C, or in particular preferably equal to or more than 700°C. If the heating temperature at the roasting step S40 is made to be higher, it tends to easily generate movement of the oxygen element from the oxide of the valuable metal (a transition metal composite oxide, or the like) to the carbon material (the negative electrode active material, or the like). By doing this, it is possible to reduce the valuable metal into a metal state. The valuable metal in this metal state can be easily dissolved at the acid exudation step S60 described later, which can contribute in enhancing the manufacture efficiency. On the other hand, from a perspective of the valuable metal reduction, an upper limit of the heating temperature is not particularly restricted, and might be equal to or less than 1500°C, equal to or less than 1400°C, or equal to or less than 1300°C. Incidentally, in consideration of a cost required for rising the temperature, the upper limit of the heating temperature is preferably equal to or less than 1200°C, further preferably equal to or less than 1100°C, or in particular preferably equal to or less than 1000°C. In addition, at the present step, it is preferable to perform with inert atmosphere, such as argon and nitrogen. By doing this, it is possible to inhibit oxidation on the valuable metal during heating.

### (5) Selecting step S50

At the present step, the battery after the roasting step S40 is crushed and configuration members of this battery are sorted. For example, regarding the lithium ion secondary battery 1 shown in FIG. 1, the electrode body 20 is accommodated at the inside of the outer case 10. Thus, it is good, after the outer case 10 is crushed, to further finely crush the electrode body 20 which is disposed at the inside. Then, by screening solid contents after the crush, it is possible to easily perform the collection of the collection object (the black mass) which is obtained by powdering a baked body of the electrode body 20. By doing this, a content amount of impurities (the Al, the Cu, or the like) in the black mass is easily decreased, and thus it is possible to enhance the collection efficiency of the valuable metal (the Li, the Co, the Ni, the Mn, or the like). However, the selecting step S40 is not a step intended to completely remove the impurities, such as the Al and the Cu, from the collection object. Although more details are described later, even if the impurities are contained in the black mass, it is possible to remove the impurities by later steps (the acid exudation step S50, the separating step S60, and the like). In other words, the present step can be suitably omitted as needed.

### (6) Acid exudation step S60

Next, at the acid exudation step S60, the electrode body (the black mass) after the collecting step S30 (here, after the selecting step S50) is immersed into the acid liquid. By doing this, it is possible to prepare the acid exudation liquid in which the metal component (the Li, the Ni, the Co, the Mn, the Cu, the Al, or the like) of the black mass has been dissolved into the acid liquid. On the other hand, the carbon of the black mass is not dissolved into the acid liquid, and thus is precipitated as a residue. By doing this, it is possible to remove the carbon. Incidentally, as a procedure of the acid exudation, it is possible to use a conventionally known procedure without particular restriction. It is suitable as an example that a pH of the acid liquid is - 1.5 to 1.5 (further suitable to be - 0.5 to 0.5). By doing this, it is possible to suitably dissolve the metal component of the black mass. Incidentally, as a specific example of the acid liquid, it is possible to use an inorganic acid, such as sulfuric acid, nitric acid, hydrochloric acid, and phosphoric acid, an organic acid, such as citric acid, ascorbic acid, oxalic acid, and acetic acid, or the like. In addition, at the present step, it is preferable that a filtration processing is performed on the acid exudation liquid after the acid exudation. By doing this, undissolved carbon can be removed efficiently. Incidentally, it is preferable that the temperature of the acid liquid is made to be equal to or more than 50°C (further suitably equal to or more than 55°C, or in particular suitably equal to or more than 60°C). By doing this, the time required for the acid exudation step S60 can be shortened. In addition, the upper limit value of the temperature of the acid liquid is not particularly restricted, and might be equal to or less than 90°C, equal to or less than 85°C, or equal to or less than 80°C.

### (7) Separating step S70

As described above, the acid exudation liquid obtained at the acid exudation step S60 contains the Li, the Al, the Cu, the Co, the Ni, the Mn, and the like. At the separating step S70, these metal components are individually separated. By doing this, it is possible to perform the collection of each valuable metal from the acid exudation liquid. Incidentally, at the separating step S70, it is possible to use a conventionally known processing technique capable of being used for extracting the metal, without particular restriction. For example, at the separating step S70 in the present embodiment, as shown in FIG. 5, a neutralization precipitation step S71, a Mn extracting step S72, a Co extracting step S73, a Ni extracting step S74, and a Li separating step S75 are performed. Below, it will be particularly explained.

### (a) Neutralization precipitation step S71

At the present step, a neutralizing agent is added to the acid exudation liquid obtained at the acid exudation step S60. By doing this, a precipitation substance containing a hydroxide (Al(OH)₃) of the Al is precipitated in the acid exudation liquid. As this result, it is possible to remove a large part of the Al in the acid exudation liquid. Incidentally, as the neutralizing agent used at the present step, it is possible to use an alkaline solution at pH 11 to 15 (suitably, pH 12 to 14). Incidentally, as a specific example of the alkaline solution described above, it is possible to use a hydroxide sodium aqueous solution, calcium hydroxide, ammonia, or the like. In addition, even at the present step, it is preferable to perform filtration on the acid exudation liquid so as to separate the precipitation substance. By doing this, it is possible to efficiently remove the Al(OH)₃ from the acid exudation liquid.

### (b) Mn extracting step S72

At the Mn extracting step S72, the Mn is extracted from the acid exudation liquid. For example, at the present step, it is good onto the acid exudation liquid to add an organic solvent (a first extraction liquid) whose extraction property with respect to the Mn is high and whose extraction properties with respect to the Li, the Al, the Cu, the Co, and the Ni are low. Then, the acid exudation liquid and the first extraction liquid are stirred so as to be suspended. By doing this, the Mn in the acid exudation liquid is dissolved into the first extraction liquid. After that, it is left until two liquids are separated. By doing this, it is possible to obtain a Mn solution in which the Mn is dissolved into the first extraction liquid and to obtain the acid exudation liquid from which the Mn is removed. Incidentally, as the first extraction liquid, it is possible to use a phosphate ester type extraction agent, an oxime type extraction agent, or the like. As a specific example of the phosphate ester type extraction agent, it is possible to use di(2-ethylhexyl)phosphoric acid (D2EHPA), or the like. In addition, as a specific example of the oxime type extraction agent, it is possible to use 2-hydroxy-5-nonylacetophenone oxime (LIX84), 5-dodecylsalicylald oxime (LIX860), 5-nonylsalicylaldehyde oxime (ACORGA M5640), or the like. In addition, as the first extraction liquid, it is possible to use one in which these extraction agents are mixed or diluted.

In addition, at the present step, a reverse extraction processing might be performed on the Mn solution after extraction (the first extraction liquid containing the Mn). On this reverse extraction processing, at first, the Mn solution (an organic phase) and an acidic aqueous solution are stirred and mixed. Then, it is left until two liquids are separated. By doing this, it is possible to obtain the water type Mn solution in which the Mn is dissolved into the acidic aqueous solution. Incidentally, as the acidic aqueous solution used at the reverse extraction processing, it is possible to use sulfuric acid, hydrochloric acid, or the like (particularly, sulfuric acid).

### (c) Co extracting step S73

At the Co extracting step S73, the Co is extracted from the acid exudation liquid. In particular, at the present step, it is good onto the acid exudation liquid to add an organic solvent (a second extraction liquid), whose extraction property with respect to the Co is high and whose extraction properties with respect to the Li, the Al, the Cu, and the Ni are low. By doing this, it is possible to make the Co be separated from the acid exudation liquid and to obtain a Co solution in which the Co is dissolved into the second extraction liquid. Incidentally, as a specific example of the second extraction liquid, it is possible to use phosphonic acid ester, such as 2-ethylhexyl hydrogen-2-ethylhexylphosphonate (PC-88A), or the like. In addition, the reverse extraction processing might be performed even on the Co solution after the extraction (the second extraction liquid containing the Co). By doing this, it is possible to obtain the water type Co solution.

### (d) Ni extracting step S74

At the Ni extracting step S74, the Ni is extracted from the acid exudation liquid. In particular, at the present step, the organic solvent (a third extraction liquid), whose extraction property with respect to the Ni is high and whose extraction properties with respect to the Li, the Al, and the Cu are low, is added onto the acid exudation liquid. By doing this, it is possible to make the Ni be separated from the acid exudation liquid, and to obtain a Ni solution in which the Ni is dissolved into the third extraction liquid. Incidentally, as a specific example of the third extraction liquid, it is possible to use a carboxylic acid type extraction agent, such as neodecanoic acid and naphthenic acid, or the like. In addition, the reverse extraction processing might be performed even on the Ni solution after the extraction (the third extraction liquid containing the Ni). By doing this, it is possible to obtain the water type Ni solution.

### (e) Li separating step S75

As described above, in the acid exudation liquid after the Ni extracting step S64, the Ni, the Co, and the Mn have been removed and thus the Li, the Al, and the Cu are main components. At the present step, the Cu and the Al are removed from this acid exudation liquid. Incidentally, a means for removing the Cu and the Al is not particularly restricted, and thus a conventionally known means, such as solvent extraction method and ion exchange method, can be suitably used. Then, it is good to make the acid exudation liquid after the Li separating step S75 be mixed with the Li solution obtained at the collecting step S30. By doing this, it is possible to further enhance the Li collection rate at the later described Li crystallizing step S80.

### (8) Li precipitating step S80

At the present step, the Li chemical compound is made to be precipitated from the aqueous medium (the Li solution) collected at the collecting step S30. For example, at the present step, it is good to add a sodium carbonate onto the Li solution. By doing this, a crystal of the lithium carbonate (Li₂CO₃) is precipitated. As described above, regarding the manufacturing method in accordance with the present embodiment, by performing the filling step S20 and the collecting step S30, it is possible to perform collection of a large amount of Li in the battery. Furthermore, the Li remaining in the battery after the collecting step S30 is subjected to the collection at the Li separating step S75. Then, the Li precipitating step S80 in the present embodiment makes the Li subjected to the collection at the collecting step S30 and at the Li separating step S75. By doing this, it is possible to implement very high Li collection rate (for example, equal to or more than 85%).

### (9) NCM crystallizing step S90

On the other hand, the valuable metal (the Ni, the Co, or the Mn) other than the Li subjected to the collection at the separating step S70 becomes a material of a precursor (a NCM precursor) of the positive electrode active material. In particular, at the present step, a mix liquid is prepared in which the Co solution, the Ni solution, and the Mn solution are mixed. Then, the pH of this mix liquid is controlled to be alkaline. By doing this, a crystal of Ni Co Mn hydroxide (the NCM precursor) is precipitated. Incidentally, regarding the preparation of the mix liquid, it is good to change a mix ratio of each of the Co solution, the Ni solution, and the Mn solution, as needed. Then, regarding the adjustment of the pH, it is good to drop the mix liquid in addition to the alkaline solution (an ammonia water, a hydroxide sodium aqueous solution) into a response tank.

### (10) Active material generating step S100

At the present step, the NCM precursor obtained at the NCM crystallizing step S90 and the Li chemical compound obtained at the Li crystallizing step S70 are used so as to generate the positive electrode active material. In particular, the NCM precursor (the Ni Co Mn hydroxide) and the Li chemical compound (the lithium carbonate) are mixed and then baked. By doing this, it is possible to manufacture the positive electrode active material (the lithium-transition metal complex oxide) for the lithium ion secondary battery.

Above, the manufacturing method for the battery material in accordance with the present embodiment has been explained. As described above, regarding the manufacturing method having the above described configuration, the filling step is performed for filling the inside of the battery, having been electrically charged to be equal to or more than the reference SOC, with the aqueous medium. By doing this, it is possible to prepare the Li solution in which the Li of the negative electrode active material is eluted to the aqueous medium. By collecting this Li solution, it is possible to easily implement the collection of a large amount of the Li. As described above, regarding the manufacturing method in accordance with the present embodiment, it is possible to easily implement the high Li collection rate.

### 3. Another embodiment

Above, one embodiment of the herein disclosed technique has been explained. Incidentally, the herein disclosed technique is not restricted to the above described embodiment, and semantically covers another embodiment in which various configurations are changed. Below, another embodiment of the herein disclosed technique will be described.

### (1) Regarding step after collecting step

Regarding the manufacturing method in accordance with the above described embodiment, the roasting step S40 to the active material generating step S100 are performed after the collecting step S30 is performed. However, the above described embodiment is not intended to restrict the step after the collecting step S30 is performed. In other words, regarding the herein disclosed manufacturing method, the step after the collecting step can be added, deleted, and changed, as needed.

For example, regarding the manufacturing method in accordance with the above described embodiment, by performing the roasting step S40 to the NCM crystallizing step S90, the collection of the various valuable metals (the Li, the Ni, the Co, and the Mn) is performed from the battery after the collecting step S30. However, it is enough for the herein disclosed technique to implement the efficient collection of the Li from the lithium ion secondary battery, and thus it is not required to perform the roasting step S40 to the NCM crystallizing step S90. For example, regarding the herein disclosed manufacturing method, collection of the sufficient amount of Li can be implemented only by collecting the aqueous medium (the Li solution) into which the Li is dissolved. Therefore, the herein disclosed manufacturing method might use the Li in the Li solution and use the transition metal (the Ni, the Co, the Mn, or the like) being not the reproduction material so as to manufacture the positive electrode active material (the lithium-transition metal complex oxide).

In addition, various separation processings performed at the separating step S70 are not restricted to the neutralization precipitation step S71 to the Li separating step S75 described above. For example, the battery in which the lithium nickel manganese composite oxide is used as the positive electrode active material hardly contains the cobalt (Co). If this kind of battery is the collection object, the Co extracting step S73 can be omitted. In addition, when almost all of the Li inside the battery have been collected by the filling step S20 and the collecting step S30, it is also possible to omit the Li separating step S75. As described above, the step after the collecting step S30 can be changed suitably, according to the configuration element of the collection object (the battery), and thus is not restricted to a specific step.

### (2) Regarding collection object

In addition, the collection object of the herein disclosed manufacturing method is not restricted to the lithium ion secondary battery 1 shown in FIG. 1 and FIG. 2. For example, in the above described embodiment, as the outer case, a box-shaped case made from aluminum is used. However, a shape or material of the outer case does not restrict the herein disclosed technique. For example, the outer case might be a laminate outer case. This laminate outer case is formed by making 2 laminate films be opposed to each other in a state where they sandwich the electrode body and by welding outer periphery edge parts of this pair of laminate films. In a case where this kind of laminate outer case is used, it is good to use a syringe, or the like, so as to fill the inside of the outer case with the aqueous medium. By doing this, it is possible to easily fill the inside of the battery with the aqueous medium.

### [Test example]

Below, a test example related to the herein disclosed technique will be explained. Incidentally, contents of the test example described below are not intended to restrict the herein disclosed technique.

### 1. Preparation of test battery

In the present test, a predetermined test battery was prepared and the collection of the Li from the test battery was performed. Below, a material of the test battery used in the present test will be described. At first, regarding the test battery in the present test, the lithium nickel cobalt manganese composite oxide (LiNi_{1/3}Co_{1/3}Mn_{1/3}O₂) was used as the positive electrode active material. As the positive electrode substrate, the aluminum foil was used. On the other hand, as the negative electrode active material, the graphite was used. As the negative electrode substrate, the copper foil was used. Then, as the separator, a separator having a 3 layer structure of PP/PE/PE was used. In addition, as the outer case, the square shape case made from aluminum was used. In other words, main components of the test battery in the present test are the Li, the Ni, the Co, the Mn, the Cu, the Al, and the C. Additionally, in the test examples 1 to 10, a 3 V class battery was prepared, and in the test examples 11 to 13, a 4.1 V class battery was prepared.

### 2. Procedure of Li collection

In the present test, 13 kinds of test examples respectively based on different collection procedures were provided. Below, the collection procedure for each example will be explained.

### (1) Test example 1

In the test example 1, at first, the test battery was electrically discharged until reaching SOC = 0% (battery remaining capacity: 0.2 Ah). Next, the battery after the electric discharge was heated (roasted) at 800°C. Then, by crushing the outer case and then by sieving the resultant, the electrode body (the black mass) after the roast was collected. In addition, an Al member (the positive electrode substrate, or the like) obtained when the sieving was performed was collected as the Al member. After that, the acid exudation was performed at which the black mass was immersed into the sulfuric acid. By doing this, the acid exudation liquid containing the metal element of the black mass was obtained. Next, to make the pH be 3 to 5, the neutralization precipitation was performed at which the NaOH was dropped to the acid exudation liquid. By doing this, the precipitation substance was generated in the acid exudation liquid. Then, by a solid-liquid separation, the acid exudation liquid in which the precipitation substance was removed was collected.

### (2) Test example 2

In the test example 2, the test battery electrically discharged at a condition the same as the test example 1 was submerged in water. In particular, after the sealing plug of the electrically discharged battery was removed, it was immersed (submerged in water) for 7 days in 20 L of the aqueous medium (5 wt% sodium chloride aqueous solution). Then, the battery was pulled up so as to collect the aqueous medium. Then, on the battery subjected to the collection, the roast, the acid exudation, and the neutralization precipitation were performed at a condition the same as the test example 1, so as to collect the acid exudation liquid and the Al member.

### (3) Test example 3

In the test example 3, the inside of the test battery electrically discharged at a condition the same as the test example 1 was filled with the aqueous medium. In particular, the sealing plug of the electrically discharged battery was removed, 100 mL of the aqueous medium (5 wt% sodium chloride aqueous solution) was injected to the inside of the outer case, and then it was left for 7 days. Then, the inside of the outer case was sucked so as to collect the aqueous medium. Then, on the battery whose aqueous medium inside the outer case was removed, the roast, the acid exudation, and the neutralization precipitation were performed at a condition the same as the test examples 1 and 2, so as to collect the acid exudation liquid and the Al member.

### (4) Test example 4

In the test example 4, the aqueous medium filled into the inside of the battery was changed to a pure water. Then, another procedure and conditions were set to be the same as the test example 3, the aqueous medium, the acid exudation liquid, and the Al member were collected.

### (5) Test example 5

In the test example 5, the test battery was electrically charged to satisfy SOC = 20% (remaining capacity: 2.2 Ah). After that, the inside of the battery was filled with a water type solvent (pure water), similarly to the test example 4. Then, according to a procedure the same as the test examples 3 and 4, the aqueous medium, the acid exudation liquid, and the Al member were collected.

### (6) Test example 6

In the test example 6, except for electrically charging the test battery to satisfy SOC = 40% (remaining capacity: 4.2 Ah), according to a procedure similar to test examples 4 to 5, the aqueous medium, the acid exudation liquid, and the Al member were subjected to collection.

### (7) Test example 7

In the test example 7, the test battery was electrically charged till SOC = 60% (remaining capacity: 6.2 Ah). After that, similarly to the test example 2, the test battery was submerged in water being the water type solvent (the sodium chloride aqueous solution). Then, according to a procedure the same as the test example 2, the aqueous medium, the acid exudation liquid, and the Al member were collected.

### (8) Test example 8

In the test example 8, the test battery was electrically charged till SOC = 60% (remaining capacity: 6.2 Ah). After that, similarly to the test examples 4 to 6, the inside of the battery was filled with the water type solvent (the pure water). Then, according to a procedure the same as the test examples 4 to 6, the aqueous medium, the acid exudation liquid, and the Al member were collected.

### (9) Test example 9

In the test example 9, the test battery was electrically charged till SOC = 60% (remaining capacity: 6.2 Ah). After that, similarly to the test examples 4 to 6, the inside of the battery was filled with the water type solvent. However, in the test example 9, the water type solvent filled into the inside of the battery was changed to a 5 wt% sodium chloride aqueous solution. Then, according to a procedure the same as the test examples 4 to 6, the aqueous medium, the acid exudation liquid, and the Al member were collected.

### (10) Test example 10

As described above, in the test examples 10 to 12, the 4.1 V class battery was used as the test battery. Then, in the test example 10, the test battery was electrically charged to satisfy SOC = 100% (remaining capacity: 10.2 Ah). After that, similarly to the test examples 4 to 6, and 8, the inside of the battery was filled with the water type solvent (the pure water). Then, according to a procedure the same as the test examples 4 to 6, and 8, the aqueous medium, the acid exudation liquid, and the Al member were collected.

### (11) Test example 11

In the test example 11, at first, the test battery was electrically charged to satisfy SOC = 60% (remaining capacity: 6.2 Ah). After that, in the test example 11, similarly to the test example 1, the battery after the electric charge was roasted without filling with the water type solvent and being submerged in water. Then, according to a procedure the same as the test example 1, collection of the acid exudation liquid and the Al member were performed.

### (12) Test example 12

In the test example 12, the test battery was electrically discharged to satisfy SOC = 0%. Next, in the test example 12, similarly to the test examples 4 to 6, and 8, the inside of the battery was filled with the water type solvent (the pure water). Then, after the aqueous medium in the battery was collected, similarly to the other test example, the roast, the acid exudation, and the neutralization precipitation were performed so as to collect the acid exudation liquid and the Al member. Incidentally, in the test example 12, the heating temperature for the roast was reduced to 400°C.

### (13) Test example 13

In the test example 13,the collection of the aqueous medium, the acid exudation liquid, and the Al member is performed according to a procedure the same as the test example 12 except for a point that the test battery was electrically charged to satisfy SOC = 60% (remaining capacity: 6.2 Ah).

### 3. Evaluation test

In the present test, a Li amount (g) contained in the sample (the aqueous medium, the acid exudation liquid, or the Al member) collected in each test example was measured. Incidentally, the Li amount (g) in the aqueous medium was measured by a high frequency guide bind plasma method (ICP: Inductively Coupled Plasma). Incidentally, the Li amount (g) in the acid exudation liquid was measured by the ICP after the acid exudation. Then, this "Li amount (g) in the acid exudation liquid" was treated as "Li amount in the black mass (BM)". Additionally, the Li amount (g) in the precipitation substance was measured by the ICP after the precipitation substance was dissolved with an acid. The measurement result is shown in Table 1.

Then, in the present test, the Li amount in the Al member is treated as "disposal Li amount". Then, on the other hand, a total of the Li amount in the aqueous medium and the Li amount in the BM was treated as "collection Li amount". Then, a rate (%) of the collection Li amount with respect to a total Li amount (in a design manner, a total of the Li amount used for the test battery) was calculated as "Li collection rate". The result is shown in Table 1.

**Table 1**

| Table 1 | | | | | | | | | | |
|---|---|---|---|---|---|---|---|---|---|---|
| | Battery | SOC(%) | Water processing | Aqueous medium | Roasting temperature (°C) | Collection Li amount | | | Waste Li amount | Li collection rate (%) |
| | | | | | | Li amount in aqueous medium (g) | Li amount in BM (g) | Total | Li amount in Al member (g) | |
| Test example 1 | 3 V | 0 | - | - | 800 | - | 297 | 2.97 | 1.99 | 58 |
| Test example 2 | 3 V | 0 | Submerged | Sodium chloride aqueous solution | 800 | 0.175 | 299 | 3.17 | 1.99 | 61 |
| Test example 3 | 3 V | 0 | Filled | Sodium chloride aqueous solution | 800 | 0.08 | 295 | 3.03 | 1.97 | 59 |
| Test example 4 | 3 V | 0 | Filled | Pure water | 800 | 0.217 | 294 | 3.16 | 1.97 | 61 |
| Test example 5 | 3 V | 20 | Filled | Pure water | 800 | 0.537 | 285 | 3.39 | 1.54 | 66 |
| Test example 6 | 3 V | 40 | Filled | Pure water | 800 | 1.057 | 3.33 | 4.39 | 0.58 | 85 |
| Test example 7 | 3 V | 60 | Submerged | Sodium chloride aqueous solution | 800 | 0.175 | 2.98 | 3.16 | 1.99 | 61 |
| Test example 8 | 3 V | 60 | Filled | Pure water | 800 | 1.577 | 313 | 4.71 | 0.24 | 91 |
| Test example 9 | 3 V | 60 | Filled | Sodium chloride aqueous solution | 800 | 1.32 | 3.22 | 4.54 | 0.58 | 88 |
| Test example 10 | 4.1 V | 100 | Filled | Pure water | 800 | 2.617 | 217 | 4.79 | 0.05 | 93 |
| Test example 11 | 4.1 V | 60 | - | - | 800 | - | 3.23 | 3.23 | 0.24 | 63 |
| Test example 12 | 4.1 V | 0 | Filled | Pure water | 400 | 0.017 | 3.94 | 3.96 | 0.98 | 77 |
| Test example 13 | 4.1 V | 60 | Filled | Pure water | 400 | 1.577 | 3.13 | 4.71 | 0.02 | 91 |

As shown in Table 1, in the test examples 6, 8 to 10, and 13, a very high Li collection rate being equal to or more than 85% was implemented. Thus, it was found that, when the battery having been electrically charged to be equal to or more than a constant level was filled with the aqueous medium, a large amount of Li was eluted into this aqueous medium. Then, it was found that, when collection of this aqueous medium was performed, the Li collection rate could be remarkably enhanced.

In addition, regarding the acid exudations of the test examples 1 to 11, it was confirmed that the metal component in the black mass was sufficiently dissolved, 4 hours after the black mass and the sulfuric acid were mixed. On the other hand, in the test examples 12 and 13, time being about 12 hours was required in order to sufficiently dissolve the metal component. This is estimated that, since the roast temperature was low in the test examples 12 and 13, the metal material in the black mass was not sufficiently reduced so that a large amount of metal oxides were remained.

Above, the herein disclosed technique was explained in detail, but these are merely illustrations and do not restrict the scope of claims. The technique recited in patent claims contains matters in which the above-illustrated specific example is variously deformed or changed. In other words, the herein disclosed technique semantically covers embodiments recited in items 1 to item 6 described below.

### <Item 1>

A manufacturing method for a battery material, comprising:
a preparing step at which a lithium ion secondary battery having been electrically charged to be equal to or more than a predetermined reference SOC is prepared;
a filling step at which an inside of the lithium ion secondary battery is filled with an aqueous medium; and
a collecting step at which the aqueous medium is collected from the inside of the lithium ion secondary battery.

### <Item 2>

A manufacturing method for the battery material recited in item 1, wherein
the preparing step comprises:
a measuring step at which a SOC of the lithium ion secondary battery is measured;
a deciding step for deciding whether the measured SOC is equal to or more than the reference SOC or not; and
an electrically charging step at which the lithium ion secondary battery having the measured SOC being less than the reference SOC is electrically charged to be equal to or more than the reference SOC.

### <Item 3>

The manufacturing method for the battery material recited in item 1 or 2, wherein
the reference SOC is set within a range being equal to or more than 20% and not more than 100%.

### <Item 4>

The manufacturing method for the battery material recited in any one of items 1 to 3, further comprising:
a roasting step at which the lithium ion secondary battery after the collecting step is heated;
a selecting step at which a collection of an electrode body from the inside of the lithium ion secondary battery after the roasting step is performed; and
an acid exudation step at which the electrode body is immersed into an acid liquid.

### <Item 5>

The manufacturing method for the battery material recited in any one of items 1 to 4, wherein
at the filling step, the lithium ion secondary battery filled with the aqueous medium is left for 1 day or more.

### <Item 6>

The manufacturing method for the battery material recited in any one of items 1 to 5, wherein
the aqueous medium does not contain a metal salt, substantially.

## Claims

1. A manufacturing method for a battery material, comprising:
a preparing step (S10) at which a lithium ion secondary battery (1) having been electrically charged to be equal to or more than a predetermined reference SOC is prepared;
a filling step (S20) at which an inside of the lithium ion secondary battery (1) is filled with an aqueous medium; and
a collecting step (S30) at which the aqueous medium is collected from the inside of the lithium ion secondary battery (1).

2. A manufacturing method for the battery material according to claim 1, wherein the preparing step (S10) comprises:
a measuring step (S11) at which a SOC of the lithium ion secondary battery (1) is measured;
a deciding step (S12) for deciding whether the measured SOC is equal to or more than the reference SOC or not; and
a electrically charging step (S13) at which the lithium ion secondary battery (1) having the measured SOC being less than the reference SOC is electrically charged to be equal to or more than the reference SOC.

3. The manufacturing method for the battery material according to claim 1 or 2, wherein
the reference SOC is set within a range being equal to or more than 20% and not more than 100%.

4. The manufacturing method for the battery material according to any one of claims 1 to 3, further comprising:
a roasting step (S40) at which the lithium ion secondary battery (1) after the collecting step (S30) is heated;
a selecting step (S50) at which a collection of an electrode body (20) from the inside of the lithium ion secondary battery (1) after the roasting step (S40) is performed; and
an acid exudation step (S60) at which the electrode body (20) is immersed into an acid liquid.

5. The manufacturing method for the battery material according to any one of claims 1 to 4, wherein
at the filling step (S20), the lithium ion secondary battery (1) filled with the aqueous medium is left for 1 day or more.

6. The manufacturing method for the battery material according to any one of claims 1 to 5, wherein
the aqueous medium does not contain a metal salt, substantially.
